# EUROPEAN PATENT APPLICATION

(11) **EP 1 279 544 A2**
(43) Date of publication of application: **29.01.2003**
(21) Application number: 02016296.2
(22) Date of filing: 23.07.2002
(51) Int. Cl.: B60K 6/04, F16H 3/72, H02K 57/00

(54) **Hybrid drivetrain for a vehicle**

(30) Priority: 23.07.2001 JP 2001221242; 23.07.2001 JP 2001221222
(71) Applicant: NISSAN MOTOR CO., LTD., Yokohama-shi Kanagawa-ken (JP); Renault S.A., 92513 Boulogne Billancourt Cedex (FR)
(72) Inventor: Oshidari, Toshikazu, Yokosuka-shi, Kanagawa (JP); Nakano, Masaki, Yokohama-shi, Kanagawa (JP); Kargar, Keyvan, 78000 Paris (FR); Poupon, Joel, 75015 Paris (FR)
(74) Representative: Grünecker, Kinkeldey, Stockmair & Schwanhäusser Anwaltssozietät

(57) **Abstract**

A drivetrain for transmitting driving force from an engine to a drive shaft of a vehicle, includes a planetary gear mechanism including first to five rotational elements arrayed on an alignment chart, the first rotational element being connected to an output shaft of the engine and the second rotational element being connected to the drive shaft, a first motor-generator connected to the third rotational element, and a second motor-generator connected to the fourth rotational element.

## Description

### FIELD OF THE INVENTION

The present invention relates to a drivetrain for a hybrid vehicle including an engine and a motor and, more particularly, to a drivetrain which performs a continuously variable speed change by a differential mechanism such as a planetary gear mechanism.

### BACKGROUND OF THE INVENTION

JP2000-142146A published by the Japanese Patent Office in 2000 discloses a drivetrain for a hybrid vehicle which is constructed by connecting a generator, an engine and a motor for driving a vehicle to a sun gear, a planetary carrier and a ring gear of a planetary gear mechanism. According to this drivetrain, the continuously variable speed change and the increase or decrease of the output torque can be performed by using the differential function of the gears to distribute the engine output partially to the generator and supplying the generated electric power to the motor.

### SUMMARY OF THE INVENTION

However, the drivetrain of the prior art constructs a four-element differential mechanism by arraying two planetary gear trains each having a sun gear, a carrier and a ring gear, so it has a large number of parts and results in the problem that the size of the drivetrain is increased. In order to construct a five-element differential mechanism, another planetary gear train has to be added which results in further increases in size.

It is therefore an object of the present invention to provide a compact drivetrain having five elements.

In order to achieve the above object, this invention provides a drivetrain for transmitting driving force from an engine to a drive shaft of a vehicle, comprising a planetary gear mechanism including first to five rotational elements arrayed on an alignment chart, the first rotational element being connected to an output shaft of the engine and the second rotational element being connected to the drive shaft, a first motor-generator connected to the third rotational element, and a second motor-generator connected to the fourth rotational element.

The details as well as other features and advantages of this invention are set forth in the remainder of the specification and are shown in the accompanying drawings.

### BRIEF DESCRIPTION OF THE DRAWINGS

Fig. 1A is an explanatory diagram of the differential mechanism of a first embodiment of the present invention and Fig. 1B is its alignment chart.

Fig. 2A is a schematic construction diagram of a drivetrain of the first embodiment and Fig. 2B is its alignment chart.

Fig. 3 is a characteristic diagram illustrating the maximum driving force characteristics in the various states by the embodiment.

Fig. 4 is a characteristic diagram illustrating the output sharing characteristics of motor-generators according to the embodiment, against the vehicle speed.

Fig. 5A is a schematic construction diagram of the second embodiment of a drivetrain according to the present invention and Fig. 5B is its alignment chart.

Fig. 6A is a schematic construction diagram of the third embodiment of a drivetrain according to the present invention and Fig. 6B is its alignment chart.

Fig. 7A is a schematic construction diagram of the fourth embodiment of a drivetrain according to the present invention and Fig. 7B is its alignment chart.

### DESCRIPTION OF THE PREFERRED EMBODIMENTS

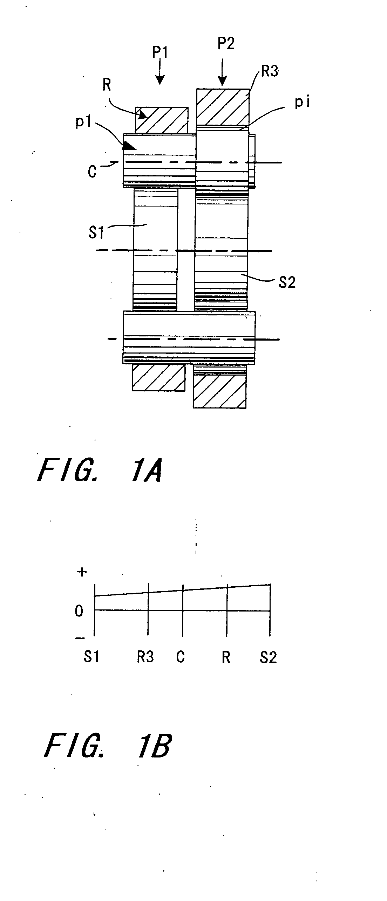

Figs. 1A and 1B show embodiments of the differential mechanism according to the present invention. This differential mechanism is a two-freedom-degree differential mechanism having five elements combining a first planetary gear train P1 and a second planetary gear train P2. Here, in the reference numerals designating the components of the planetary gear trains P1 and P2 in the figures, the suffix numeral 1 designates the components of the first planetary gear train P1, and the suffix numeral 2 designates the components of the second planetary gear train P2.

In Fig. 1A, the single-pinion type first planetary gear train P1 and the double-pinion type second planetary gear train P2 share a carrier C and a ring gear R. In other words, the carrier C carrying pinions p1 meshing with a sun gear S1 of the first planetary gear train P1 is the carrier of the second planetary gear train P2, and carries larger-diameter inner pinions pi meshing with a sun gear S2 of the second planetary gear train P2. The pinions p1 of the first planetary gear train P1 also mesh with the inner pinions pi and function as the outer pinions in the second planetary gear train P2. A ring gear R3 meshes with the inner pinions pi as a fifth element.

This differential mechanism has five elements, i.e., the two sun gears S1 and S2, the two ring gears R and R3 and the carrier C, and has two-degrees of freedom. If the rotation speeds of any two of the elements are fixed, the rotation speeds of the remaining elements are fixed. Fig. 1B shows the corresponding alignment charts. In an alignment chart, the tooth number is distributed on an abscissa and the rotation speed of each element is expressed on an ordinate at a point distributed at a tooth number ratio. The rotation speeds of the elements always display a linear relationship proportional to the tooth number ratio.

If the input from the engine and the output to the drive shaft are assigned to any two of the four elements other than the ring gear R3 and if the motor-generators are connected to the remaining two elements, there are many combinations of the rotation speeds of the two motor-generators which achieves a certain speed ratio between the input rotation speed and the output speed. From these combinations, therefore, there can be selected the combination which can minimize the power supported by the motor-generators.

Next, the drivetrain for a front-wheel drive vehicle using the above-mentioned differential mechanism will be described.

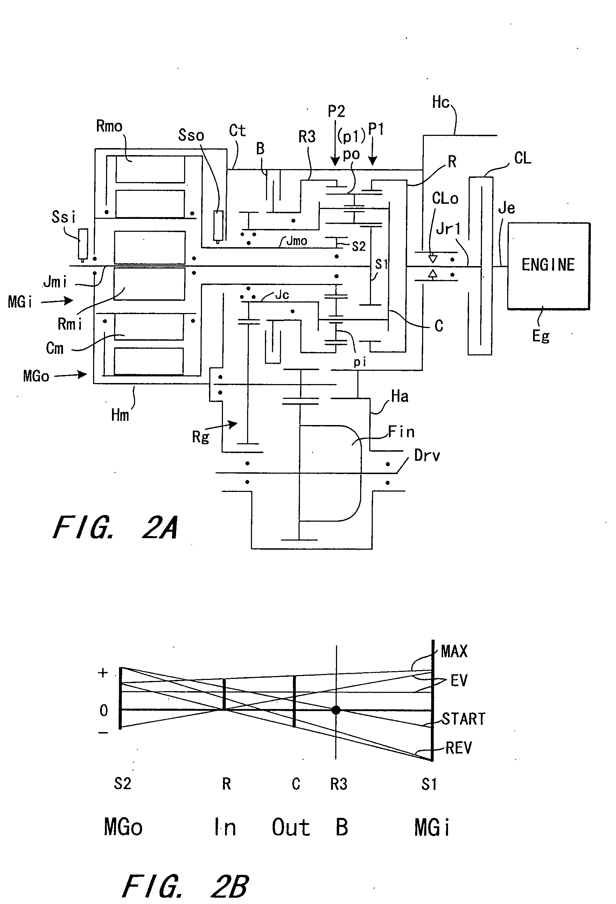

Figs. 2A and 2B and succeeding figures show the schematic constructions and their alignment charts of different embodiments. Firstly, the embodiment of Figs. 2A and 2B will be described in detail with respect to its construction, and the remaining embodiments will be described only with respect to points of difference. The common members among these embodiments will be designated by common reference numerals and the reference characters designating the elements of the planetary gear trains are identical to those of Figs. 1A and 1B.

In Figs. 2A and 2B, reference letters Hm designate a motor housing, Ct a transmission casing, Hc a clutch housing, and Ha an axle housing. The clutch housing Hc is provided with a clutch CL for coupling or decoupling an output shaft Je of an engine Eg and a transmission input shaft Jr1. The single-pinion planetary gear train P1 and the double-pinion planetary gear train P2 are connected to share their ring gears R and carriers C (composite planetary gear mechanism) and are housed in the casing Ct. The input shaft Jr1, to which the clutch CL is connected, is the ring gear shaft of the planetary gear train P1. The input shaft Jr1 is equipped with a one-way clutch CLo for preventing the reverse rotation of the engine Eg. The planetary gear train P2 of the double pinion type is expressed (as in the following construction diagrams) in diagrams expanded conveniently in a section extending through the two pinion shafts.

In the motor housing Hm, there are coaxially supported an inner rotor Rmi and an annular outer rotor Rmo, by which compact electric machines are constructed to act as two motor-generators MGi and MGo. Between the inner and outer rotors Rmi and. Rmo, there is interposed an annular coil Cm, by which the rotors Rmi and Rmo can be respectively actuated as a generator or motor. An inner rotor shaft Jmi is connected to the sun gear S1 of the planetary gear train P1 through a hollow outer rotor shaft Jmo, and the outer rotor shaft Jmo is connected to the sun gear S2 of the planetary gear train P2. Letters Ssi and Sso in Fig. 2A designate rotation speed sensors for detecting the rotation speeds of the inner rotor shaft Jmi and the outer rotor shaft Jmo respectively. Here, in the reference numerals designating the components of the motor-generators MGi and MGo, the suffix letter i designates the components of the first motor-generator MGi, and the suffix letter o designates the components of the second motor-generator MGo.

The axle housing Ha is connected to the side face of the transmission casing Ct. In the axle housing Ha, a final reduction mechanism Fin and a drive shaft Drv are supported in parallel with the planetary gear trains P1 and P2. The rotation of the carrier C is transmitted to the final reduction mechanism Fin through a reduction gear Rg. In this case, a carrier shaft Jc is an output shaft connected to the drive shaft Drv via the final reduction mechanism Fin.

The ring gear R3 which is supported coaxially with the ring gear R of the planetary gear train P1 meshes with inner pinions pi meshing with the sun gear S2 and outer pinions po of the planetary gear train P2. A brake B for braking the rotation of the ring gear R3 is mounted in the casing Ct.

The alignment chart is shown in Fig. 2B. In the alignment chart, reference letters EV designate characteristics at the running time only by the motor-generators, START characteristics at the starting time with the brake B being applied, MAX characteristics at the maximum vehicle speed, and REV characteristics while reverse running. Moreover, reference letters Out designate the output to the drive shaft Drv, and letters In designate the input from the engine.

In this alignment chart, the tooth numbers of the ring gears R and R3, the sun gears S1 and S2 and the carrier C are designated by *Nr*, *Nr3*, *Ns1*, *Ns2* and *Nc*, respectively, and the length between the ring gear R and the carrier C is 1. On the alignment chart, the length from the carrier C to the ring gear R3 which is the fifth element is expressed by *Nr*/*Nr3*, the length from the carrier C to the first sun gear S1 by , and the length from the ring gear R to the second sun gear S2 by *Nr*/*Ns2-1*. In the planetary gear train, since the length *Ns*/*Nr* can be usually set within a range of about 0.35 to 0.6,

Length between the input In and output Out
= Length between the ring gear R and the carrier C
= 1;
Length between the output Out and the motor-generator MGi
= Length (*Nr*/*Ns1*) between the carrier C and the sun gear S1
= 1.67 - 2.86;
Length between the input In and the motor-generator MGo
= Length (*Nr*/*Ns2-1*) between the ring gear R and the sun gear S2
= 0.67 - 1.86.

Moreover, the length between the output Out and the brake B (= Length (*Nr*/*Nr3*) between the carrier C and the ring gear R3) is less than 1 in the construction of the present embodiment, in which the ring gear R3 meshes with the larger-diameter inner pinions pi and it does not interfere with the pinions p1 (= the outer pinions po in the second planetary gear train P2) meshing with the ring gear R. If the inner pinions pi are axially extended so that the ring gear R does not interfere with the pinion p1, the ring gear R3 may have a relatively small diameter, and this length is 1 or more.

These relations allow the rotation speed of the input side motor-generator MGi to be set about 1 to 1.25 times as high as the engine rotation speed and the rotation speed of the output side motor-generator MGo to be set about 2 to 3.5 times as high as the engine rotation speed. Moreover, the brake B can be set within a range suitable for assisting the start.

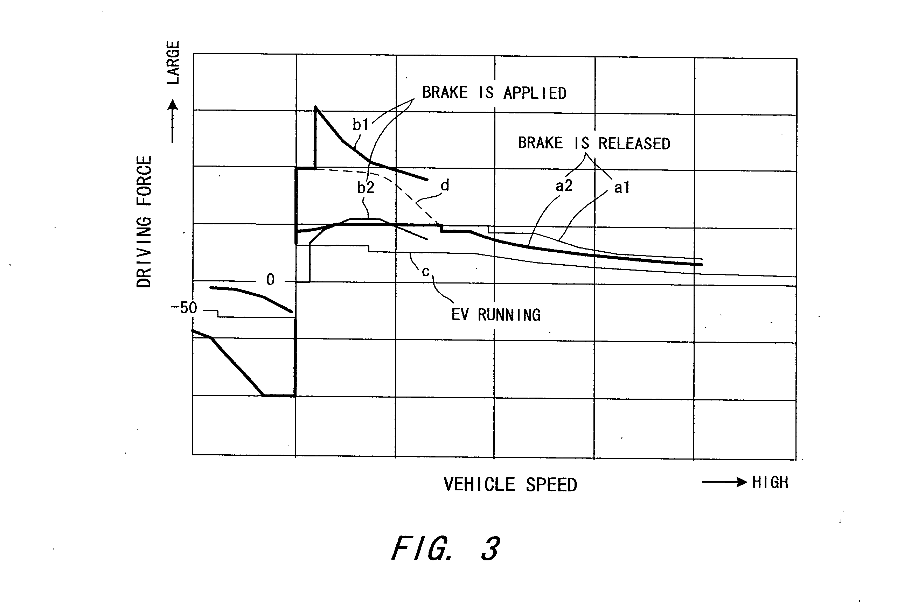

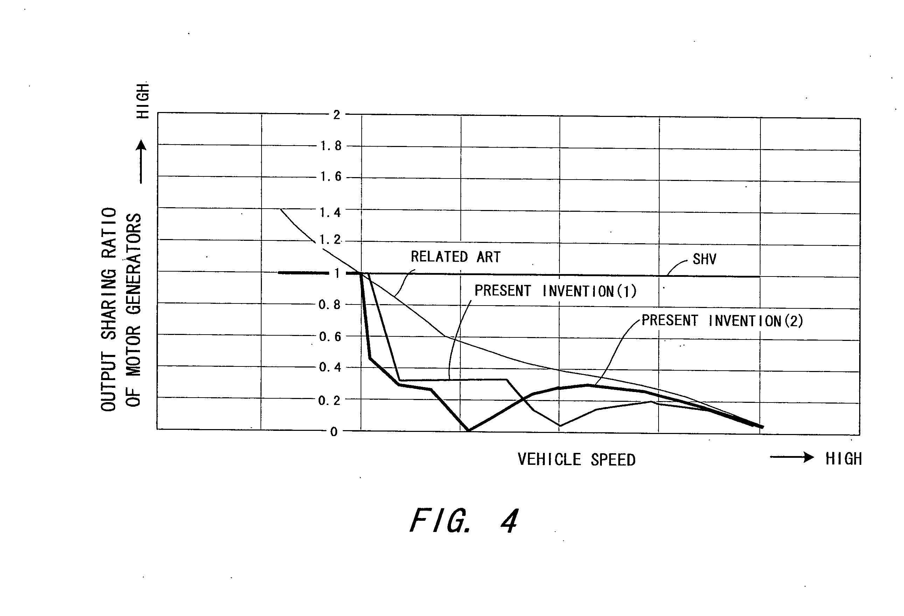

Fig. 3 and Fig. 4 show the characteristics of the hybrid vehicle to which the above-mentioned drivetrain is installed. Fig. 3 illustrates the maximum driving force in the various states, and Fig. 4 illustrates the ratio (i.e., the output sharing ratio) of the power passing through the motor-generators relative to the power transmitted by the drivetrain in the state where the power generation and power consumption are balanced.

In Fig. 3, curves a1 and a2 illustrate the maximum driving force characteristics of the case where the battery power is used and not used when the brake B is released. On the other hand, curves b1 and b2 illustrate the maximum driving force characteristics of the case where the battery power is used and not used when the brake B is applied. As illustrated, a large driving force is obtained in a low speed range including startup by applying the brake B. Here, curve c illustrates the maximum driving force characteristics in the EV running, and curve d illustrates the driving force characteristics of the case where the driving force is controlled to change smoothly.

The "PRESENT INVENTION (1)" and the "PRESENT INVENTION (2)" in Fig. 4 are different from each other only in the settings of the final reduction ratio of the vehicle, and the vehicle can run in most vehicle speed ranges in either case at an output sharing ratio of 30% or less of the motor-generators. The letters SHV in Fig. 4 designate the case of a series hybrid vehicle, which is always given an output sharing ratio of 1 because the engine output is wholly used for driving the generator.

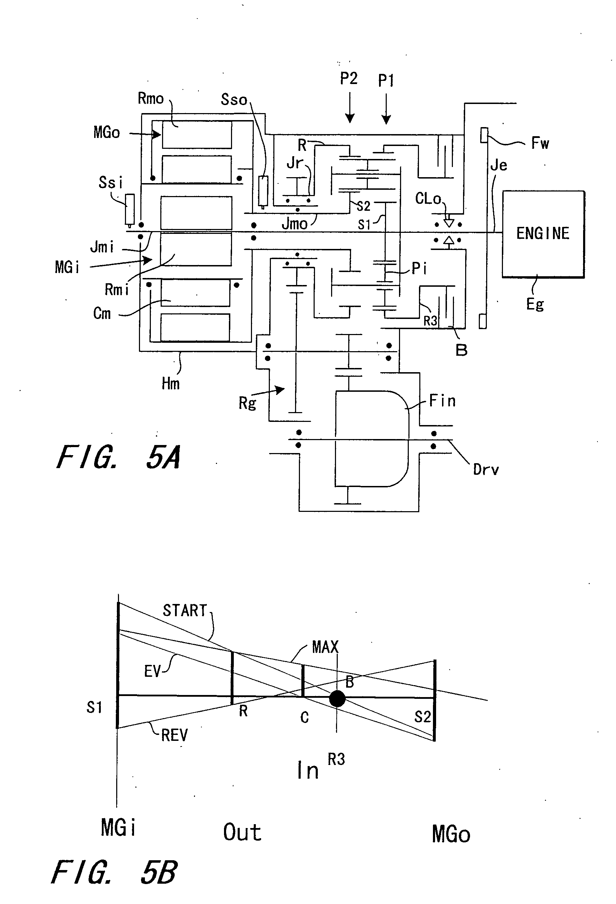

Figs. 5A and 5B show a second embodiment. The differences from the construction of Fig. 2A reside in the fact that the clutch CL is omitted, in that the first planetary gear train P1 having the sun gear S1 connected to the inner rotor shaft Jmi is a double-pinion type whereas the second planetary gear train P2 having the sun gear S2 connected to the outer rotor shaft Jmo is a single-pinion type, in the fact that the carrier shaft Jc is the input shaft connected to the engine Eg, and in the fact that the ring gear R is connected to the final reduction mechanism Fin through the reduction gear Rg. The letters Fw in Fig. 5A designate a flywheel of the engine Eg. Moreover, the brake B brakes the ring gear R3 meshing with the inner pinions pi of the planetary gear train P1.

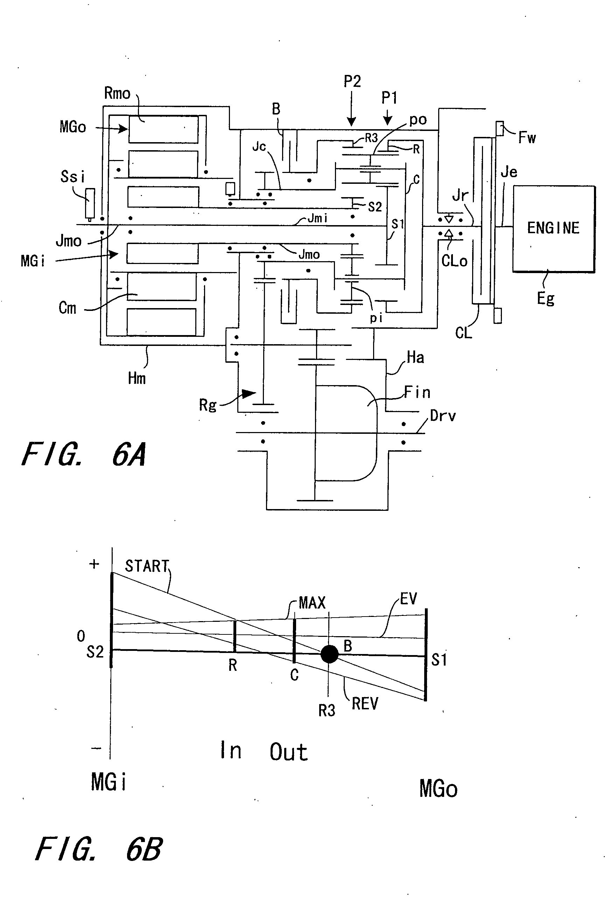

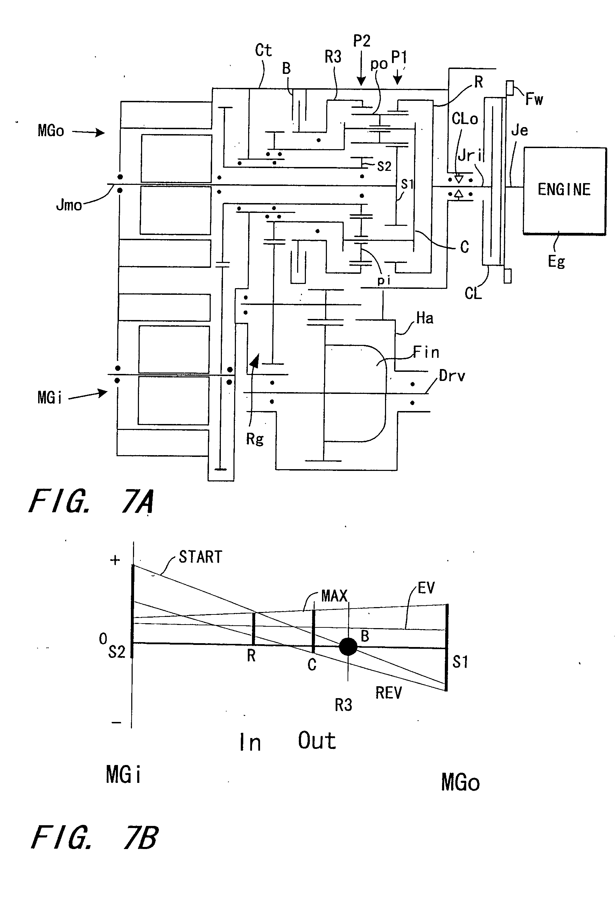

Figs. 6A, 6B and 7A; 7B show other embodiments having the construction in which one element of the differential mechanism having the five elements like that of Fig. 2A is provided with the brake B. The construction shown in Fig. 6A is different from that of Fig. 2A in that the sun gear S1 of the planetary gear train P1 is connected to the outer rotor shaft Jmo, and in that the sun gear S2 of the planetary gear train P2 is connected to the inner rotor shaft Jmi. The construction shown in Fig. 7A is different from that of Fig. 2A in that there are provided the two motor-generators MGi and MGo which are independent of each other.

The inventions supported by the above-mentioned embodiments are as follows:

According to the first invention, a two-freedom-degree differential mechanism having five rotational elements is constructed by arranging a single-pinion type first planetary gear train and a double-pinion type second planetary gear train coaxially, by sharing the carriers and ring gears and by providing the ring gear as the fifth rotational element which meshes with the inner pinions meshing the sun gear of the second planetary gear train.

According to the second invention, the first invention is such that the brake is provided for braking the element other than the elements to which the input, the output and the two motor-generators are assigned.

According to the third invention, the first and second inventions are such that the motor-generators are assigned to the two sun gears of the differential mechanism respectively.

According to the fourth invention, the first and second inventions are such that the output and the input are assigned to the carrier and the ring gear of the differential mechanism respectively.

According to the fifth invention, the brake of the second invention brakes either one of the two ring gears of the differential mechanism.

According to the sixth invention, the first and second inventions are such that the two motor-generators are coaxially arranged.

According to the seventh invention, the first, second and sixth inventions are such that at least one of the shafts of the two sun gears is made hollow so that the other sun gear shaft passes through the hollow sun gear shaft.

According to the present invention, the single-pinion type first planetary gear train and the double-pinion type second planetary gear train share the carriers and the ring gears. The two sun gears having smaller sizes and smaller torque capacities than those of the remaining elements are located at the two ends of an alignment chart to act as members of lower torques and higher speeds, so that the gear trains are well balanced in strength and can be downsized.

The ring gear is made to mesh as the fifth element with the inner pinions which mesh with the sun gear of the second planetary gear train, so the five-element differential mechanism can be constructed with little increase in the size.

In the second invention, by applying the brake, the speed ratios of the remaining elements can be changed more widely, so the starting performance of the vehicle can be improved, for example, by increasing the reduction ratio in a low speed range.

Where the ring gear is braked as in the fifth invention, moreover, the ring gear is positioned in the outermost circumference of the differential mechanism, so the brake can be easily designed and the structure is simplified.

According to the third invention, the motor-generators for a lower output and a higher speed than those of the output or input element are assigned to the sun gear of the relatively small size and torque capacity, so a compact highly efficient drive drivetrain can be obtained.

According to the fourth invention, the output which supports the largest torque is assigned to the carrier which can support a larger torque than those of the remaining elements, so the strength design can be rationalized and the drivetrain can be downsized. Moreover, a pinion supported by the carrier has a one-to-one meshing relation to all the remaining elements, so the mechanical transmission efficiency can be enhanced.

According to the sixth invention, the two motor-generators are arranged coaxially with both the differential mechanism and the engine. It is, therefore, sufficient to provide the gear mechanism, as arranged in parallel with those elements, only for the output to the drive shaft. Thus, the structure of the drive train can be simplified.

According to the seventh invention, the two sun gear shafts can be extended to one end of the differential mechanism without enlarging the mechanism and can be coupled to the motor-generators with the simple construction. Especially by making the two motor-generators into the coaxial structure having inner and outer rotors, the drive train can be further downsized.

The entire contents of Japanese Patent Applications P2001-221222 (filed July 23, 2001) and P2001-221242 (filed July 23, 2001) are incorporated herein by reference.

Although the invention has been described above by reference to a certain embodiment of the invention, the invention is not limited to the embodiment described above. Modifications and variations of the embodiments described above will occur to those skilled in the art, in the light of the above teachings. The scope of the invention is defined with reference to the following claims.

## Claims

1. A drivetrain for transmitting driving force from an engine (Eg) to a drive shaft (Drv) of a vehicle, comprising:
a planetary gear mechanism (P1, P2) including first to five rotational elements arrayed on an alignment chart, the first rotational element being connected to an output shaft of the engine (Eg) and the second rotational element being connected to the drive shaft (Drv);
a first motor-generator (MGi) connected to the third rotational element, and
a second motor-generator (MGo) connected to the fourth rotational element.

2. A drivetrain according to claim 1, wherein the planetary gear mechanism comprises:
a first sun gear (S1);
a second sun gear (S2);
an outer pinion (p1) which meshes with one of the two sun gear;
an inner pinion (pi) which meshes with the other of the two sun gear and the outer pinion;
a carrier (C) carrying the outer pinion (p1) and the inner pinion (pi);
a first ring gear (R) which meshes with the outer pinion (p1), and
a second ring gear (R3) which meshes with the inner pinion (pi).

3. A drivetrain according to claim 2, wherein
the carrier (C) is connected to the drive shaft (Drv), and
one of the two ring gears (R, R3) is connected to the output shaft of the engine (Eg).

4. A drivetrain according to claim 3, further comprising a brake (B) which brakes the other ring gear.

5. A drivetrain according to claim 2, wherein the first sun gear (S1) is connected to one of the two motor-generators (MGi, MGo), and the second sun gear (S2) connected to the other of the two motor-generators (MGi, MGo).

6. A drivetrain according to claim 1, further comprising a clutch (CL) interposed between the output shaft of the engine (Eg) and the first rotational element.

7. A drivetrain according to claim 1, further comprising a reverse rotation preventing mechanism (CLo) for preventing the first rotational element from rotating in the reverse direction.
